# EUROPEAN PATENT SPECIFICATION

(11) **EP 0 317 723 B1**
(45) Date of publication and mention of the grant of the patent: **02.02.1994**
(21) Application number: 88115232.6
(22) Date of filing: 16.09.1988
(51) Int. Cl.: A47J 47/16, A47F 7/00

(54) **Device for storing a plurality of dishes or the like in a plurality of stacks**
Vorrichtung zum Aufbewahren von Geschirr oder dergleichen in mehreren Stapeln
Dispositif de stockage de la vaisselle ou similaire en plusieurs piles

(30) Priority: 17.09.1987 US 97836
(43) Date of publication of application: 31.05.1989
(73) Proprietor: InterMetro Industries Corporation, Wilkes-Barre Pennsylvania 18705 (US)
(72) Inventor: Cohn, Robert J., Dallas, Pennsylvania 18612 (US); Banko, Ronald C., North Wales, Pennsylvania 19454 (US); Welsch John H., Moscow,Pennsylvania (US)
(74) Representative: Schmidt-Evers, Jürgen, Dipl.-Ing.

(56) References cited:
- US-A- 1 916 238
- US-A- 2 544 053
- US-A- 2 670 853
- US-A- 3 173 546
- US-A- 3 512 826

## Description

### BACKGROUND OF THE INVENTION

### Field of the Invention

The present invention relates to a device for storing a plurality of dishes or the like in a plurality of stacks. This device has particular utility as a dish dolly or cart for storing and transporting dishes of various sizes in institutions, such as hospitals or restaurants. Of course, this device may be utilized to store and transport other dish or saucer-shaped objects which are stackable in "poker-chip" fashion.

### Description of the Prior Art

Devices are known for storing and transporting objects such as dishes. For example, InterMetro Industries Corporation, the assignee of the subject invention, makes and sells various types of such devices. In each one of a series of such devices called "Poker-Chip" dish dollies, a number of partitions project vertically from a base to form a plurality of vertically extending column-like regions in which stacks of dishes can be confined. Models identified by numbers T17A44P, T17A24P, T17A40P, T17B44P, T17B24P, T17B40P, T1AN, T1BN, T2AN, T2BN, T3N, T4N, T5N, 18C04P, and T16A in these series may be designed to store, for example, four, eight, ten, or twelve stacks of dishes, depending on the specific model chosen.

However, these models provide only one or two slits in each vertically extending column-like region through which the operator can grasp the dishes to place them in the cart or remove them from the cart. In those models in which a stack can only be accessed through one slit, access to the dishes is difficult and time consuming. This is also true of those models having two slits because the slits are usually positioned 90 degrees apart, which also makes it difficult to access the stack of dishes. In order partially to compensate for this difficulty in accessing the dishes, the slits in the partitions are made relatively large. As a result, the dishes are not adequately protected from abuse because a relatively large proportion of the lateral periphery of the dishes is exposed to the exterior of the cart through the slits.

Another disadvantage of these dollies is that a certain amount of space is wasted because a partition is placed at the center of the dolly, thereby preventing dishes from being stacked in that region. For example, model number T4N discussed above, is partitioned into nine areas; however, only eight of these areas are used for stacking dishes. The ninth area is taken up by a partition at the center of the cart. This central partition wastes valuable space that could otherwise be used to store dishes. Consequently, a larger number of dollies must be used than would otherwise be necessary when the number of stacks of dishes exceeds the number of vertically extending column-like regions in the dolly by one. This is particularly disadvantageous in many settings such as hospitals and restaurants, where floor space is at a premium.

Other dish dollies, which suffer the same disadvantages described above are also offered by Cambro Manufacturing Company, Precision Metal Products, Inc., and Crescent Metal Products. For example, the Cambro Dish Cart Model DC 975 is a one piece double-wall polyethylene dish cart that can accommodate four stacks of dishes. Each stack has only one relatively large slit therein. Precision Metal Products, Inc. models DC-226, DC-231, DC-126, and DC-131 are dollies with one or two compartments adapted to hold three stacks of dishes each without partitions between the three stacks. One side of the compartment is completely open. Model DCAS-4 from Precision Metal Products, Inc. is a dolly divided into four sections by a centrally disposed cross-shape partition, having adjustable dividers in each section that can be moved to accommodate 1, 2, or 3 stacks of dishes in each section. Dish dollies in the 501 series from Crescent Metal Products comprise a number of different dish carts, each using a central partition. Some of the dollies in the 501 series also use, in addition, adjustable partitions for accommodating different number of stacks of dishes.

In each of the models from the companies noted above, the region for holding stacks of dishes either has one side that is completely open, thereby providing little protection for the dishes, or has only one or two slits which are positioned so that it is difficult for the operator to remove or place dishes in the dolly, and which are sized so that they do not adequately protect the dishes. Further, each of these models include a central partition that extends through the center of the cart, thereby preventing an additional stack of dishes from being placed at the center of the dolly. As a result, in order to accommodate a large number of stacks, more dollies must be used than would otherwise be necessary if the center of the dollies were free to hold another stack of dishes.

Other stands or containers for holding a plurality of stacked elements are described in U.S. Patent No. 2,972,421 and U.S. Patent No. 2,670,853. However, these stands also suffer from the same apparent disadvantages described above.

Finally, other types of partitioned containers, such as those described in U.S. Patent Nos. 3,661,268 and 2,454,858 directed to storage stands for garment hangers and U.S. Patent No. 943,714 relating to a partitioned drawer, are even less well adapted to hold stacks of objects, such as dishes.

Thus, there is a need for a dolly for storing a plurality of dishes or similar objects in a plurality of object-receiving regions that permits easy access to the dishes while simultaneously providing maximum protection for the dishes. There is also a need for a dolly that uses its central portion to accommodate a stack of dishes.

Further prior art is disclosed in the document US-A-1,916,238, which describes a display cabinet or container especially designed for holding and displaying small objects of merchandise, such as metal boxes and tubes that are utilized for holding cosmetics and particularly compacts of face powder, rouge, lipsticks and the like. As those objects have different shape and size this display cabinet is constructed to accommodate different sizes of said objects by longitudinally disposing blocks, disposable in parallel slots. Such partition blocks have substantially semi-circular recesses and two oppositely positioned blocks provide an oval space between according to variable space between these blocks. Generally there are slits on either sides between oppositely positioned blocks according to the free choice of distance between these blocks.

Still further prior art is disclosed in the document US-A-3,512,826, which describes a mobile food service wagon with a large variety of constructive details. There are provided receiving regions for stags of dishes of different size. There are wall members with large open slits. There is no teaching how to position such slits for optimum handling.

### Summary of the Invention

It is an object of the present invention to provide a device for storing dishes or the like that permits ready excessability to the dishes and protects them from abuse, while at the same time holding a maximum number of stacks of dishes in the device. This object is achieved by the features of claim 1 or 2.

The invention provides a device that overcomes the disadvantages of prior art devices as described above. Stacked dishes or the like can be removed easily, while nevertheless enclosing the lateral periphery of the dishes to a sufficiently large extent to protect them from abuse.

In accordance with the preferred embodiments, the present invention is a device for storing a plurality of dishes or similar objects. The device includes a structure such as a base for supporting the plurality of objects, and a structure for partitioning the space extending above the base into a plurality of object-receiving regions. The partitioning structure has one pair of slits in each object-receiving region. The slits in each pair are spaced substantially diametrically opposite from each other in each object-receiving region. In one embodiment, the partitioning structure includes four spaced-apart generally T-shaped partitions, each having two surfaces which form the periphery of different object-receiving regions. The four partitions together form four object-receiving regions, each bounded by a pair of spaced apart surfaces from different partitions. The spaces between the pair of surfaces defining each object-receiving region form two slits on substantially diametrically opposite sides of each object-receiving region. The partitions are spaced apart so that one slit in each pair in each object-receiving region extends directly above one corner of the base. In addition, each partition is spaced from an axis extending through and perpendicular to the center of the base so as to form a central open region in the center of the device. The other slit in each object-receiving region opens onto this central open region.

Because the slits in each object-receiving region are substantially diametrically opposite each other, it is easy for the operator to load and unload dishes into the object-receiving regions by grasping the dishes from opposite sides. This easy accessibility of the dishes in each object-receiving region permits the slits to occupy a relatively small proportion of the total lateral periphery of the object-receiving regions. Thus, in one embodiment, it is possible for the partitions to enclose at least 60% of the lateral periphery of the object-receiving regions, with the slits together occupying no more than 40% of the lateral periphery of the object-receiving regions. In another embodiment, the partitions extend over at least 75% of the lateral periphery of the object-receiving regions, with the slits together occupying no more than 25% of the lateral periphery of the object-receiving regions. Therefore, the objects stored in the device are protected to a great extent from abuse, due to the relatively small portion of the lateral periphery of the object-receiving regions that are open to the exterior through the slits.

In another embodiment, the partitioning structure partitions the space extending above the base into nine object-receiving regions, one of which extends through and surrounds an axis perpendicular to the base and extending through the center of the base. Each object-receiving region has a pair of slits, with the characteristics noted above. Each object-receiving region also has substantially the same size and shape and is formed by two object-receiving region-defining surfaces from different partitions.

The partitioning structure in this embodiment comprises six exterior partitions, which define the exterior walls of the device. Two of the exterior partitions are corner partitions which extend upwardly from opposite corners of the base and comprise one object-receiving region-defining surface. Four of the exterior partitions are spaced from the other corners of the base and each comprises two object-receiving region-defining surfaces. Also provided are two generally cross-shaped interior partitions. Each interior partition comprises four object-receiving region-defining surfaces. Because each object-receiving region is defined by two object-receiving region-defining surfaces of different partitions and because this embodiment has eighteen such surfaces, the partitioning structure forms nine object-receiving regions. One of these regions is central and open, extending above the center of the base.

Due to the positioning of one of the object-receiving regions above the center of the base, it is possible to provide nine equally sized object-receiving regions in the device, thereby accommodating a maximum number of stacks of dishes in a minimum amount of space.

Finally, each of the embodiments noted above may also include means for stabilizing the plurality of dishes stacked in the object-receiving regions. This stabilizing means can comprise a plurality of vertical stabilizing fins projecting from each object-receiving region-defining surface toward the center of each object-receiving region.

Thus, the device of the present invention provides a simple and elegant, yet significant improvement over known dish dolly devices.

These and other objects of the present invention will be understood from the following detailed description provided below in conjunction with the accompanying drawing.

### BRIEF DESCRIPTION OF THE DRAWING

Figure 1 is a perspective view of a first embodiment of the present invention, which can accommodate four stacks of objects.

Figure 2 is a side elevational view of the first embodiment of the present invention illustrated in Figure 1.

Figure 3 is a top plan view of the first embodiment of the present invention illustrated in Figure 1.

Figure 4 is a vertical transverse cross-sectional view of the first embodiment of the present invention taken along plane 4-4 in Figure 3.

Figure 5 is a vertical fragmentary cross-sectional view of the first embodiment of the present invention taken along plane 5-5 in Figure 3.

Figure 6 is a bottom view of the first embodiment of the present invention illustrated in Figure 1, in which wheels, ordinarily provided, have been removed for sake of illustration.

Figure 7 is a perspective view of a second embodiment of the present invention which can accommodate nine stacks of objects.

Figure 8 is a side elevational view of the second embodiment of the present invention illustrated in Figure 7.

Figure 9 is a top plan view of the second embodiment of the present invention illustrated in Figure 7.

Figure 10 is a vertical transverse cross-sectional view, taken along plane 10-10 in Figure 9, of the second embodiment of the present invention.

Figure 11 is a vertical fragmentary cross-sectional view, taken along plane 11-11 in Figure 9, of the second embodiment of the present invention.

Figure 12 is an enlarged detailed view of an encircled portion XII in Figure 11 of the second embodiment of the present invention and may be equally will adapted to the first embodiment.

Figure 13 is a bottom view of the second embodiment of the present invention illustrated in Figure 7.

### DETAILED DESCRIPTION OF THE PREFERRED EMBODIMENTS

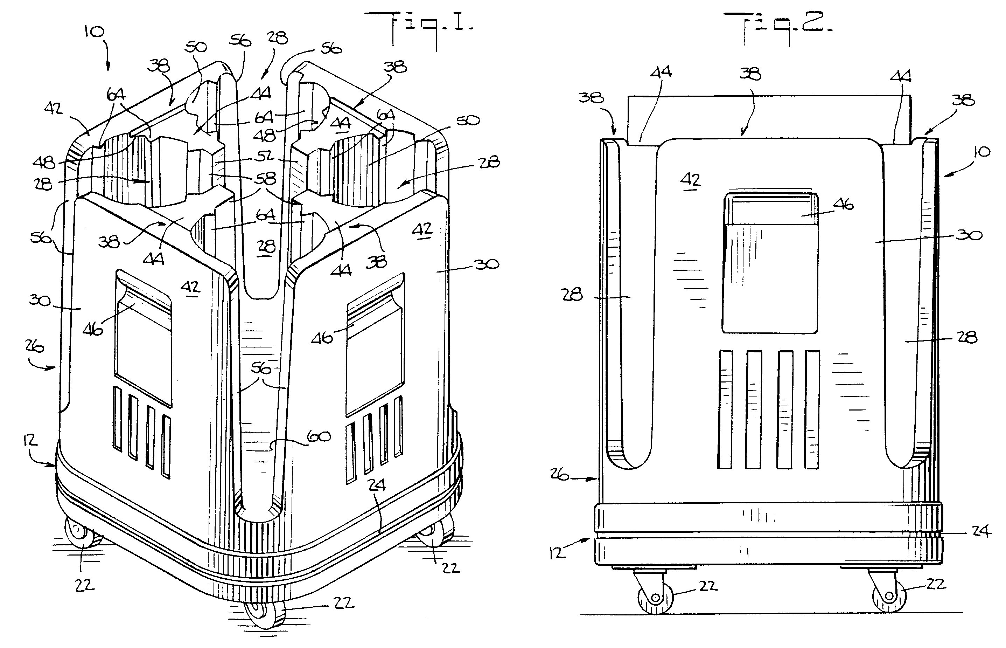

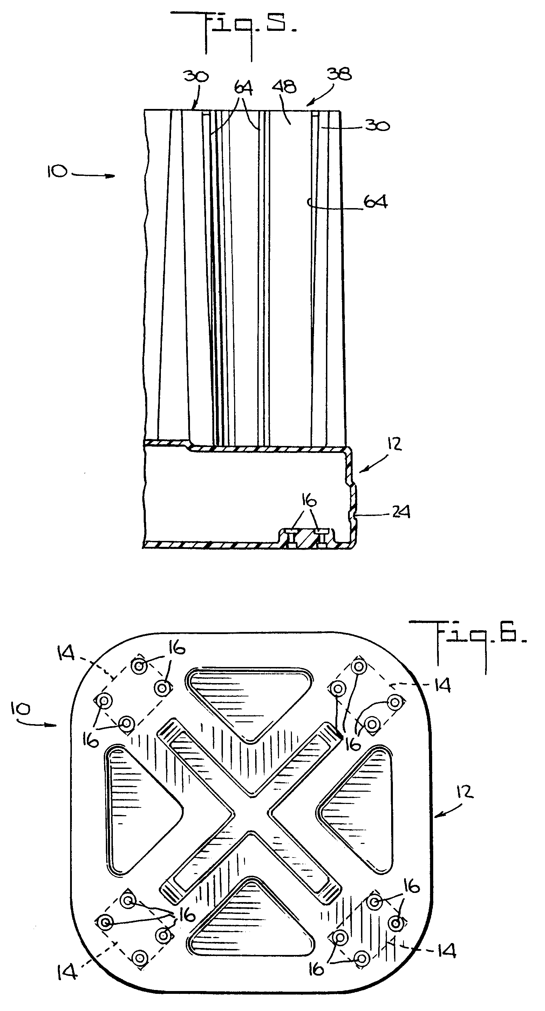

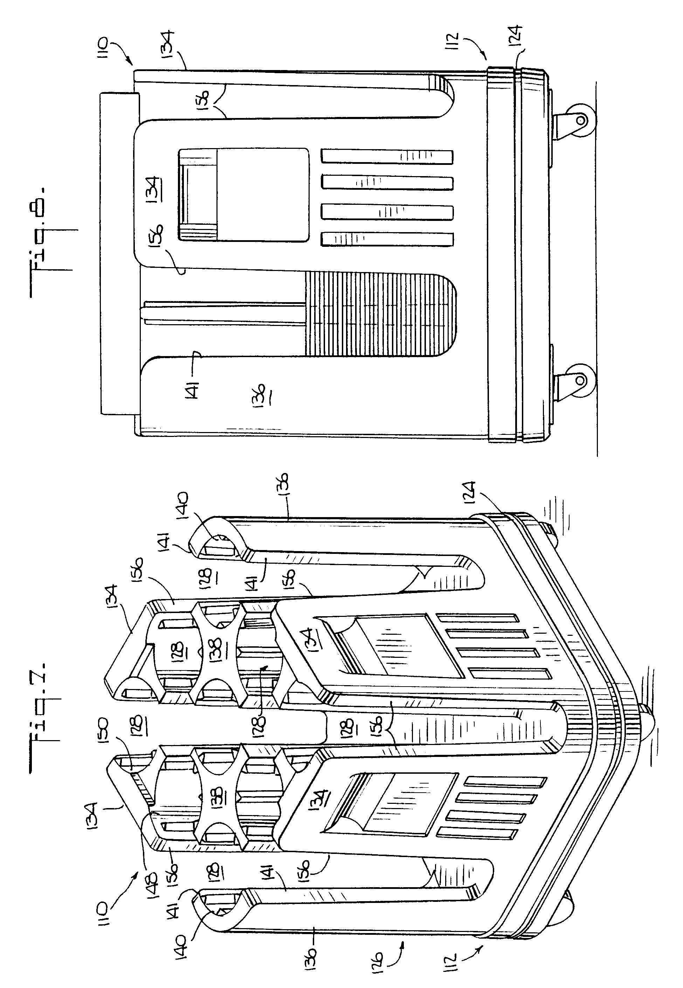

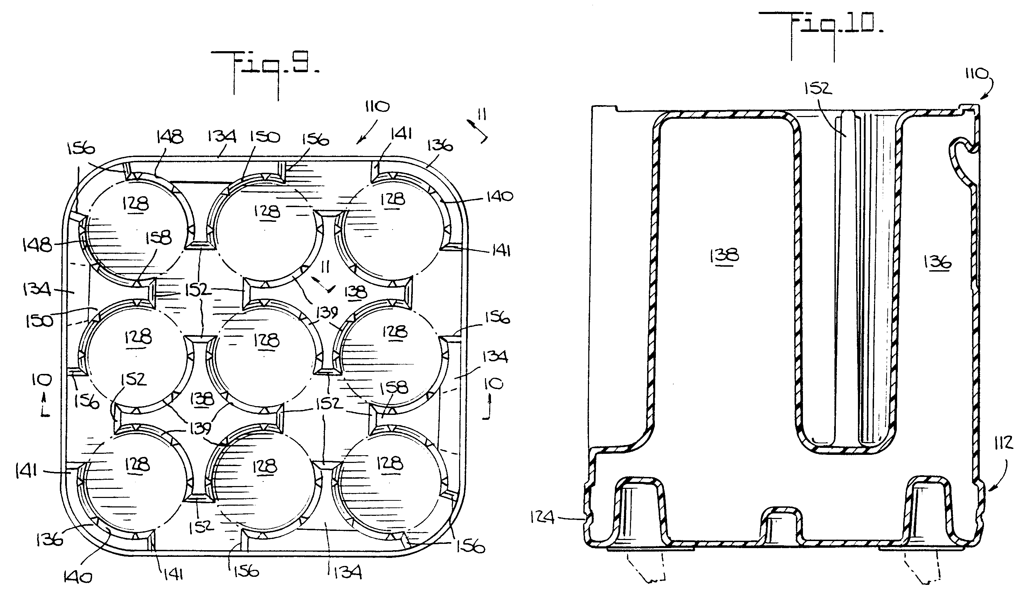

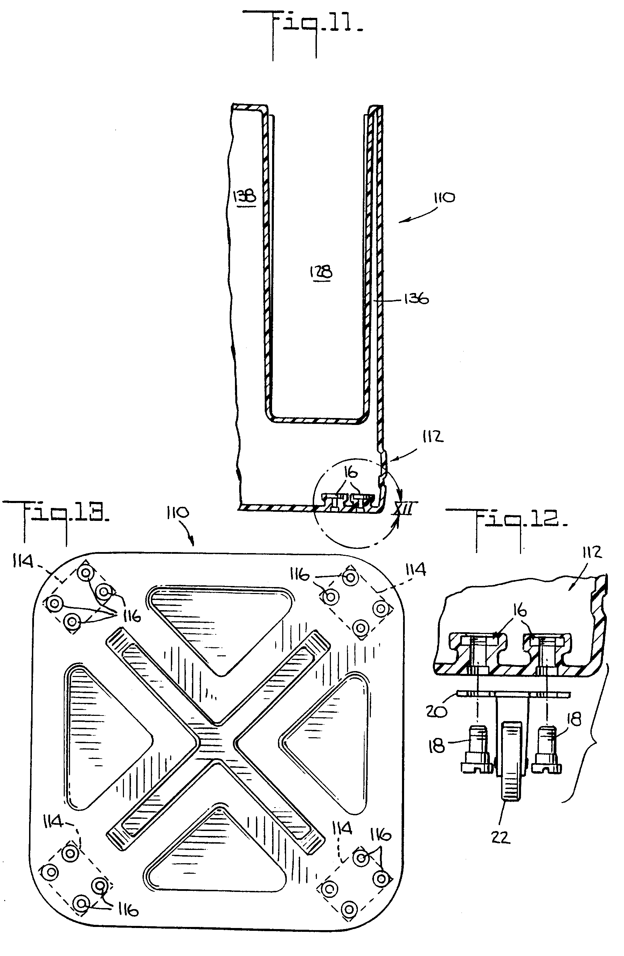

Two preferred embodiments of the present invention are illustrated in the drawing. Figures 1 to 6, illustrate a first preferred embodiment, in which the device is designed to accommodate four stacks of objects, such as dishes or the like, that are of equal size and shape, and Figures 7 to 13 illustrate a second embodiment in which the device is designed to accommodate nine stacks of objects that are of equal size and shape. Figure 12 illustrates a wheel structure for the second embodiment that may be utilized in the first.

This device has particular utility in hotels, restaurants, and other institutions, but may be used with equal advantage to store other dish or saucer-like objects that are round, oval, or a large number of other shapes. For convenience, however, the preferred embodiment of the present invention will be described with reference to the storage of dishes.

Referring now to the first embodiment illustrated in Figures 1 to 6, the device of the present invention is generally indicated at 10 and includes a square, flat, horizontally extending base 12 with rounded corners.

Cart 10 comprises one unitary piece that can be composed, for example, of a seamless one-piece double-wall unit of polyethylene with a foamed-in-place core for structural strength. The cart in the preferred embodiment is produced by rotational molding of polyethylene. However, it is within this scope of the invention to rotationally mold the device out of another material, or to produce the unitary structure by a method other than rotational molding. Further, it is within the scope of the present invention to produce the cart 10 as a non-unitary but integral structure in which base 12 is attached by suitable means to the partitions discussed in detail below.

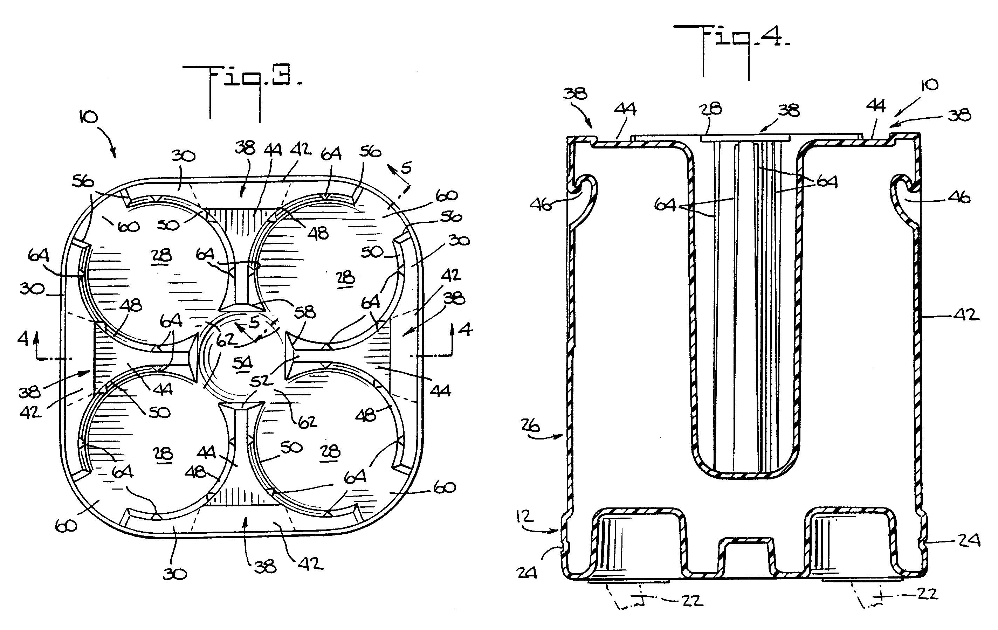

The outer surface of the base includes a portion that is recessed to form a band 24 which extends completely around the base periphery. Because the portion above the base is recessed with respect to the base, base 12 forms two projecting bands above and below recess band 24 as illustrated in Figures 1 and 2.

Base 12 has four triangular recesses 25 in the bottom thereof, and a X-shaped recess extending between the four triangular recesses that are illustrated in Figures 4 and 6. The top surface 27 of base 12 forms a floor for supporting the objects such as dishes, which are stacked thereon. The structure defining the regions adapted to receive the separate stacks of dishes will now be described.

The cart 10 further includes structure 26 for partitioning the space extending above base 12 into a plurality of substantially vertically extending object-receiving regions 28. Partitioning structure 26 forms one unitary body with base 12. In the embodiment illustrated in Figures 1 to 6, each object-receiving region 28 has substantially the same size and shape, i.e. cylindrical, with a substantially circular horizontal cross-sectional shape. These object-receiving regions are adapted to receive a plurality of stacked objects. such as dishes, which will rest on the floor 27 of base 12.

Partitioning structure 26 comprises four generally T-shaped partitions 30 that extend generally perpendicularly but taper upwardly and inwardly from base 12.

Also provided are rack-retaining structures 38 on the top surface of each partition for retaining a plurality of stacked racks, which are shown in dashed lines at the top of Figure 2, positioned on top of the device. Rack retaining structure 38 comprises the top surfaces of a first portion 42 and a second portion 44 of each partition. First portion 42 is raised with respect to second portion 44, and can be clearly seen in Figures 1, 2, and 4.

As result of this structure, when dishes are stacked in each of the four object-receiving regions 28, racks for carrying these dishes can be stacked on top of device 10, saving additional space.

First portion 42 comprises one outer wall of device 10. Each first portion 42 of each partition 30 also includes a handle 46 of sufficient size to accommodate the user's hand thereon so that the cart may be lifted or otherwise manipulated for movement. Handle 46 is a recess in first portion 42. The recess is formed by a wall which is inclined at 60° with respect to the plane passing through the outer wall of first portion 42 to provide for mold clearances.

Portion 44 of each generally T-shaped partition 30 projects inwardly from the first portion 42 toward an axis extending through the center of and perpendicular to base 12 and comprises two object-receiving region-defining surfaces 48 and 50. Surface 48 defines a portion of the boundary of one region 28 and surface 50 of the same partition defines a portion of the boundary of an adjacent region 28. Further, the boundary of each object-receiving region is defined by a pair of object-receiving region-defining surfaces from different partitions, as 30 illustrated in Figures 1 and 3. The horizontal cross-section of surfaces 48 and 50 has the shape of a partial circle.

In the embodiment illustrated in Figures 1 to 6, partitions 30 extend upwardly, substantially perpendicular to base 12 and the outer walls of adjacent first portions 42 of partitions 30 extend substantially perpendicular to each other. Each second portion 44 comprises an end 52 connecting surfaces 48 and 50. Ends 52 face but are spaced from the above-mentioned axis. As a result, a central open region 54 is formed that is clearly illustrated in Figure 3 and the axis is a longitudinal axis of symmetry of region 54.

Each object-receiving region-defining surface 48 and 50 also comprises an outer end 56 adjacent the outer wall, and an inner end 58 spaced inwardly from the outer end and adjacent end 52. Each object-receiving region 28 is defined by and comprises a pair of object-receiving region-defining surfaces of different partitions whose out ends 56 are spaced apart to define a first slit 60. The inner ends 58 of each pair of object-receiving region-defining surfaces defining one region 28 are also spaced apart to define a second slit 62. This second slit 62 borders and opens onto central open region 54.

Central open region 54 and slits 62 are large enough to accommodate a person's arm and hand to permit her or him to grasp a dish or a stack of dishes stacked in any object-receiving region 28. Further, each slit 60 extends directly above a different corner of base 12. As a result, in each preferred embodiment the slits in each object-receiving region 28 are substantially diametrically opposite from each other. Further, the slits into each object-defining region extend substantially symmetrically on either side of a vertical plane extending through the center of each slit and through the center of the object-receiving region, for example, as illustrated by plane 5-5 in Figure 3.

Because the slits of each object-receiving region 28 are diametrically opposite each other, dishes stacked in such region can easily be removed by the operator by reaching with one hand down through central open region 54 and slot 62 to grasp the stack of dishes on one side, while the other hand grasps stack of dishes on the opposite side through slot 60. Because the use of a pair of diametrically opposed slits renders it easy to remove a stack of dishes, the slits 60 and 62 can be made relatively narrow, thus increasing the protection for the dishes. In the embodiment illustrated in Figures 1 to 6, the object-receiving region-defining surfaces 48, 50 preferably enclose about 75% of the lateral periphery of each object-receiving region 28, with each pair of slits 60 and 62 together extending over not more than about 25% of the lateral periphery of the object-receiving region 28.

Three vertical stabilizing fins 64 extend along substantially the entire vertical length of partition 30 in each surface 48 and 50 and project toward a longitudinal axis which extends perpendicular to base 12 and upwardly through the center of the object-receiving region 28. Thus, each region 28 has six such fins 64. These fins 64 stabilize the dishes stacked in each region 28 and, in each region 28, the three fins on each object-receiving region-defining surface are spaced apart by substantially equal distances. Further, the stabilizing fins 64 are substantially parallel to one another and have a substantially triangular cross-sectional shape, in which each lateral side of each fin preferably forms a 45 degree angle with respect to surfaces 48 or 50.

Base 12, as more clearly seen in Figure 6, also has four molded-in mounting base plates 14 that can be composed of metal. Each base plate 14 includes four threaded anchors 16 each adapted to receive a threaded bolt 18 that extends through openings in a caster plate 20 as illustrated in Figure 12, which shows structure utilized with equal advantage in the first embodiment described above and the second embodiment described below. Each caster plate 20 has secured thereto one caster wheel 22 for supporting the cart for movement along a floor.

A second embodiment of the present invention is illustrated in Figures 7 to 13. All of the features noted above with respect to the first embodiment illustrated in Figures 1 to 6, are also found in this embodiment except for the number and placement of object-receiving regions, the number and shape of the partitions. Thus, for example, the second embodiment has stabilizing fins, two diametrically opposed slits in each object-receiving region, partitions which form one unitary body with a base, four caster plates and a four base plates, rack retaining means, and a central open column. In addition, each outer wall of the cart has recess which functions as a handle to accommodate the user's hand therein; however, rather than being inclined by 60° with respect to the outer wall of the cart, as is the case in the first embodiment, the recess is inclined by 70° with respect to the outer walls of the cart in the second embodiment.

More specifically, the embodiment illustrated in Figures 7 to 13 comprises a cart 110 having a square, flat, horizontally extending base 112 with rounded edges. Base 112, as clearly seen in Figures 11 and 13, has four molded-in mounting base plates 114, each with four threaded anchors 116. The structural arrangement and mounting of casters 22 is the same as that described with respect to the embodiment illustrated in Figures 1 to 6.

Cart 110 is a unitary piece which can be composed, for example, of a seamless one-piece double-wall unit of polyethylene with a foamed-in-placed core for structural strength. The cart in this embodiment is also preferably produced by rotational moldin of polyethylene. However, it is within the scope of the present invention to produce this cart and the cart of the other embodiment by other means, such as blow molding, structural foam molding, and reaction injection molding.

The outer surface of base 112 includes a portion which is recessed in a band 124 which extends completely around the periphery of the base, as illustrated in Figures 7 and 8.

Base 112 has four triangular recesses in the bottom thereof, and a X-shaped recess extending between the triangular recesses, which are illustrated in Figures 10 and 13. The top surface of base 112 forms a floor for supporting dishes that are stacked thereon in nine object-receiving regions. A stack of dishes in one region is represented by horizontal lines in Figure 8. The structure which defines each of these object-receiving regions will now be described.

A structure 126 partitions the space extending above base 112 into nine substantially vertically extending object-receiving regions 128. Each object-receiving region 128 has substantially the same size and shape, and substantially the same cross-sectional shape. However, it is within the scope of the present invention for these regions to have any other shape, and to be different sizes and shapes from each other. Regions 128 are adapted to receive a plurality of stacked objects that rest on the floor, i.e. the top surface, of base 112.

Partition-defining structure 126 comprises eight partitions that extend upwardly, substantially perpendicular to base 112. Unlike the embodiment illustrated in Figures 1 to 6, these partitions do not all have the same shape. Rather, the partitions comprise six exterior partitions and two interior partitions. The six exterior partitions together form the outer walls of device 110. The exterior partitions include four generally T-shaped partitions 134 and two corner partitions 136. Corner partitions 136 extend upwardly from opposite corners of base 112. The generally T-shaped partitions 134 each comprise a first portion constituting an outer wall of cart 110 and a second portion constituting two object-receiving region-defining surfaces 148 and 150, each of which defines a portion of a different object-receiving region 128. In the second embodiment these object-receiving surfaces have partially circular a cross-section. However, it should be noted that the invention is not limited to such cross-sectionally shaped object-receiving region-defining surfaces, but includes surfaces of any shape.

Each object-receiving region-defining surface of each generally T-shaped partition 134 has an outer end 156 and an inner end 158, as illustrated in Figure 9. Outer end 156 is adjacent the outer wall of the T-shaped partition, and inner end 158 is adjacent an end 152 of partition 134 which connects surfaces 148 and 150. In contrast, the two corner partitions 136 each comprise one object-receiving region-defining surface 140 having two outer ends 141.

Each interior partition 138 is spaced from the outer edge of base 112, and is generally cross-shaped so as to define four object-receiving region-defining surfaces 139. Each inner partition 138 also comprises four ends 152 which separate two adjacent object-receiving region-defining surfaces.

Each of the eight partitions are spaced apart from each other in such a way that each region 128 comprises two diametrically opposed slits so as to permit easy access to the stacked dishes. More specifically, the four generally T-shaped exterior partitions 134 are grouped in pairs so that each pair is spaced on either side of one corner of base 112. As seen in Figures 7 and 9, one partition 134 in the pair of partitions has one of its outer ends 156 spaced from the outer end 156 of the other partition 134 in the pair so as to form a slit extending vertically directly above one corner of base 112. The other outer end 156 of each partition in each pair of generally T-shaped partitions 134 is spaced from an end 152 of an interior partition 138, so as to form another slit for another object-receiving region 128. Similarly, ends 141 of each corner partition 136 are spaced from ends 152 of an interior partition 138 so as to form two slits in the object-receiving regions defined by partitions 136 and 138.

As noted above, each object-receiving region 128 is bordered by and is defined by two object-receiving region-defining surfaces of different partitions. Further, each object-receiving region comprises a pair of slits which are on diametrically opposite sides thereof, and which extend symmetrically on either side of one vertical plane extending through the center of each slit in the pair and through the center of the object-receiving region associated with the pair. The use of eight partitions comprising four generally T-shaped partitions positioned in pairs on either side of two corners and having two object-receiving region-defining surfaces, two interior cross-shaped partitions having four object-receiving region-defining surfaces, and two corner partitions each having one object-receiving region-defining surface, permits the formation of nine object-receiving regions, with one region 128 centered on an axis perpendicular to base 12 and extending through the center of base 12. In other words, this central object-receiving region 128 doubles as the central open region of the device. Because this second embodiment permits the use of nine separate object-receiving regions, a large number of stacks can be accommodated in device 110 in a minimum amount of space. Further, in view of the use of two opposing slits in each region 128, the object-receiving region-defining surfaces can preferably enclose about 60% of the lateral periphery of each object-receiving region, with the pair of slits together extending over no more than about 40% of the lateral periphery of each object-receiving region.

As a result, the present invention provides an efficient and convenient means for storing dishes in a minimum amount of space while simultaneously providing maximum protection and easy access to the dishes. Thus, the present invention provides significant advantages over known prior devices from many points of view.

Accordingly, although two preferred embodiments of the present invention have described above in detail, it is to be understood that this description is only for purposes of illustration. Modifications may be made to the device for storing objects, such as dishes or the like, in a plurality of stacks in order to adapt it to particular applications.

## Claims

1. A device (10) with four sidewall portions for storing a plurality of objects in a plurality of stacks at object-receiving regions (28,128) therein, said device (10) comprising
means (12) for supporting said plurality of objects, said means having four corners and being a base for
partitioning means (30) for partitioning the space extending above said supporting means (12) into said object-receiving regions (28),
wherein said partitioning means extending upwardly from said base and having pairs of vertically directed slits (60,62) between said partitioning means and in the object-receiving region-defining boundary of each object-receiving region (28),
wherein said slits (60,62) are spaced substantially diametrically opposite from each other in said object-receiving regions (28) and
wherein some of said slits being positioned in the sidewall of said device (10),
**characterized** by
said object-receiving regions (28) being close together arranged two-dimensionally above the area of said base (28) and comprising
generally T-shaped cross-sectional partitioning means members (30) with three surfaces, the first surface corresponding to the horizontal portion of said T being part of a first portion (42) of said members and being a portion of the sidewalls of said device (10) and the further two surfaces corresponding to the vertical sides of the vertical portion of said T each being part of a second portion (44) of said members, said two further surfaces projecting inwardly from said sidewall portion and defining one of the two surface portions (48,50) of the region-defining boundary of two different adjacent regions of said object-receiving regions (28),
with a space between the inner ends (52) corresponding to the bottom ends of the T of the T-shaped partitioning means, said space forming a central open region (54) between said ends.

2. A device (10) with four sidewall portions for storing a plurality of objects in a plurality of stacks at object-receiving regions (28,128) therein, said device (110) comprising
means (112) for supporting said plurality of objects, said means having four corners and being a base for
partitioning means (134) for partitioning the space extending above said supporting means (112) into said object-receiving regions (128),
wherein said partitioning means extending upwardly from said base and having pairs of vertically directed slits between said partitioning means and in the object-receiving region-defining boundary of each object-receiving region (128),
wherein said slits are spaced substantially diametrically opposite from each other in said object-receiving regions (128) and
wherein some of said slits being positioned in the sidewall of said device (110),
**characterized** by
said object-receiving regions (128) being close together arranged two-dimensionally above the area of said base (128) and comprising
generally T-shaped cross-sectional partitioning means members (134) with three surfaces, the first surface corresponding to the horizontal portion of said T being part of a first portion of said members and being a portion of the sidewalls of said device (110) and the further two surfaces corresponding to the vertical sides of the vertical portion of said T each being part of a second portion of said members, said two further surfaces projecting inwardly from said sidewall portion and defining one of the two surface portions (148,150) of the region-defining boundary of two different adjacent regions of said object-receiving regions (128),
and further comprising generally double T-shaped cross-form cross-sectional partitioning means members (138) with the common horizontal portions of two T-s being a common portion of each of said double T cross-form members (138),
said double T cross-form partitioning means members (138) each having four surfaces (139) corresponding to the four sides of the two vertical portions of said T-s, each of said surfaces defining one of four surface portions (148,150) of the respective region-defining boundary of four different adjacent regions of said object-receiving regions (128) and with a space between oppositely positioned inner ends (152) of adjacent partitioning means members (134,138) forming an open region between said ends (152).

3. The device defined by claim 1 or 2,
characterized by
said objects being dishes.

4. The device defined by claim 1, 2 or 3,
characterized by
said supporting means (12,112) base having a square cross sectional shape.

5. The device defined by any one of claims 1 to 4, characterized in that said partitioning means members (30; 134, 136, 138) defining said object-receiving regions(28, 128) enclose about 60 % of the lateral periphery of said at least one object-receiving region (28, 128), and said pair of slits (60, 62) together extend over no more than about 40 % of said lateral periphery of said object-receiving regions (28, 128).

6. The device defined by any one of claims 1 to 4, characterized in that said partitioning means members (30; 134, 136, 138) defining said object-receiving regions (28, 128) enclose about 75 % of the lateral periphery of said at least one object-receiving region (28, 128), and said pair of slits (60, 62) together extend over not more than about 25 % of the lateral periphery of said object-receiving regions(28, 128).

7. The device defined by any one of claims 1 to 6, characterized in that said partitioning means members (30, 134, 138) and said supporting means (12, 112) comprise one unitary body.

8. The device defined by any one of claims 1 to 7, characterized by further comprising rack retaining means (38) for retaining a plurality of stacked racks positioned on top of said device (10, 110), said rack retaining means (38) being positioned on the top surface of said partitioning means and comprising the upper surface of at least two partition means members (30, 134, 138) thereof, each upper surface comprising said first portion (42) and said second portion (44) of a height lower than said first portion.

9. The device defined by any one of the claims 1 to 8, characterized in that said object-receiving regions (28, 128) have a substantially circular horizontal cross-sectional shape and said two surfaces (48, 50; 148, 150) of each second portion have a partially-circular shape in horizontal cross-section.

10. The device defined by anyone of the claims 1 to 9,
characterized in that,
said object-receiving regions (28,128) have equal cross-sectional size.

11. The device defined by any one of the claims 1 to 10, characterized in that said first portions (42) of adjacent partitioning means members (30, 134, 138) extend substantially perpendicularly to each other.

12. The device defined by any one of claims 1 to 11, characterized in that each second portion (44) comprises means (64) for stabilizing objects stacked in said object-receiving region (28, 128) associated with said second portion.

13. The device defined by claim 12, characterized in that said stabilizing means comprises a plurality of stabilizing fins (64) projecting toward a longitudinal axis extending through the center of said at least one object-receiving region (28, 128).

14. The device defined by claim 12 or 13, characterized in that said stabilizing means comprises three stabilizing fins (64) extending vertically upwardly from said base (12, 112) and projecting inwardly from each object-receiving region-defining surface (48, 50; 148, 150) and spaced apart from each other by substantially equal distances.

15. The device defined by claim 12 or 13, characterized in that said stabilizing means comprises six stabilizing fins (64) spaced apart from each other.

16. The device defined by claim 12, 13 or 15, characterized in that each stabilizing fin (64) is substantially mutually parallel to all others thereof, and said plurality of stabilizing fins (64) extend vertically upwardly from said base (12, 112) along substantially the entire vertical height of said partitioning means.

17. The device defined by anyone of the claims 1, 3 to 16,
characterized in that,
four T-shaped partitioning means members (30) according to four object-receiving regions (28) are provided and one of said slits (60) in each pair (60,62) of slits is positioned directly above a different corner of said supporting means (12).

18. The device defined by claim 17, characterized in that said base (12) comprises a center, said second portion (44) of each partitioning means members (30) extend from said first portion (42) toward an axis extending perpendicular to said base (12) and through said center, each second portion (44) comprises an end (58) connecting said two object-receiving surfaces (48, 50) and facing said axis, said ends (58) of each second portion (44) in a pair of object-receiving region-defining surfaces (48, 50) are spaced from each other so as to form said pair of slits (62) in each object-receiving region (28), said end (58) of each second portion (44) is spaced from said axis so as to form a central open region (54) surrounding said axis, and bounded by said ends (58) of said second portions of said partitioning means members (30), and said central open region (54) is sufficiently large so as to accommodate a user's hand and arm reaching through said central open region to grasp a dish in a stack of dishes in any of said object-receiving regions (28).

19. The device defined by claim 17 or 18, characterized in that each object-receiving region-defining surface (48, 50) of said second portion comprises an outer end (56) adjacent said outer wall and an inner end (58) spaced inwardly from said outer end (56), each of said pairs of surfaces (48, 50) defining the boundary of each object-receiving region comprise two object-receiving region-defining surfaces (48, 50) of different partitioning means members (30) whose outer ends (56) are spaced apart to define one of said slits (60) and whose inner ends (58) are spaced apart to define the other of said slits (62), said base (12) comprises four corners, and said slits (60, 62) defined by said outer ends (56) extend above said corners.

20. The device defined by any one of claims 17 to 19
characterized in that said partitioning means comprises four partition means members (38) each having two object-receiving region-defining surfaces (48, 50), in that each object-receiving region (28) is defined by a pair of object-receiving region-defining surfaces (48, 50) of different partition means members (38), in that each member (38) is generally T-shaped having first and second portions (42, 44), in that said first portion (42) forms an outer wall of said device (10), in that said second portion (44) comprises said two object-receiving region-defining surfaces (48, 50), in that an interior end (58) of said second portion (44) of each partition borders on said central open region (54) and is spaced a distance from an axis perpendicular to the supporting means (12) and extending through the center of said supporting means (12), in that said interior ends (58) of each pair of said second portions (44) of each pair of object-receiving region-defining surfaces (48, 50) are spaced apart from each other, in that the space between said interior ends (58) of each pair of second portions (44) of each pair of object-receiving region-defining surfaces (48, 50) forms one of said slits (62) in each pair of slits (60, 62) in each object-receiving region (28), and in that the exterior ends (56) of each pair of second portions (44) of each pair of object-receiving region-defining surfaces (48, 50) are spaced apart to form the other of said slits (60) in each pair of slits (60, 62) in each object-receiving region (28).

21. The device defined by anyone of the claims 2 - 16,
characterized in that,
the device (110) with nine object-receiving regions (128) has four T-shaped partitioning means members (134), two double T-cross-form partitioning means members (138) and two slits (156) above two oppositely positioned corners of said base (112).

22. The device defined by claim 21, characterized in that an axis perpendicular to the top surface of said base (112) and extending through the center of said base (112) also extends through one of said object-receiving regions (128), wherein said partitioning means comprises six exterior partition means members (134 136), portions of which form the outer walls of said device (110), and two interior partition means members (138) spaced from said outer walls.

23. The device defined by claim 22, characterized in that two (136) of said exterior partitions each comprise one object-receiving region-defining surface (140) which extends upwardly from opposite corners of said base (112), in that four (134) of said exterior partitions each comprise a generally T-shaped partition means member (134) comprising said two object-receiving region-defining surfaces (148, 150) and two interior partition means members (138) are generally cross-shaped partition means members comprising four object-receiving region-defining surfaces (139) in that each object-receiving region (128) is defined by a pair of object-receiving region-defining surfaces (139, 140, 148, 150), and in that each member of said pair of surfaces belongs to different partition means members (134, 136, 138).

24. The device defined by any one of claims 21 to 23, characterized in that said partitioning means members (134, 138) each defines a pair of spaced apart object-receiving region-defining surfaces (139, 140, 148, 150), in that said partitioning means (126) defines a pair of slits formed by the space between the two ends of the two surfaces (139, 140, 148, 150) comprising each said pair of surfaces, and in that each of said surfaces comprises three stabilizing fins projecting from said surface toward the center of said object-receiving region (128).

25. The device defined by any one of the claims 21 to 24, characterized in that one of said object-receiving regions (128) coincides with said central open region.

26. The device defined by any one of claims 21 to 24, characterized in that said partitioning means members comprise a plurality of exterior partition members (134, 136) each forming an outer wall of said device (110) and two interior partition members (138) spaced from the outer edge of said supporting means (112), in that each interior partition member (138) comprises four object-receiving region-defining surfaces (139), in that each object-receiving region (128) is defined by two object-receiving region-defining surfaces (139, 140, 148, 150) of different partition members (134, 136, 138) in that said central open region (128) is defined by object-receiving region-defining surfaces (139) of said two interior partition members (138), in that said plurality of exterior partition members comprise six exterior partition members (134, 136), two of which are corner partition members (136) which extend upwardly from opposite corners of said supporting means (112), and four of which (134) are spaced from the other corners of said supporting means (112), in that each of said four exterior non-corner partition members (134) comprise two object-receiving region-defining surfaces (148, 150), in that each corner partition (136) comprises one object-receiving region-defining surface (140), in that each partition member (134, 136, 138) is spaced from the other partition members (134, 136, 138), and in that each slit is formed by the space between said partition members (134, 136, 138).

## Patentansprüche

1. Eine Vorrichtung (10) mit vier Seitenwänden zur Aufnahme einer Mehrzahl von Gegenständen in einer Mehrzahl von Stapeln in Bereichen (28, 128) zur Aufnahme der Gegenstände, wobei besagte Vorrichtung (10) Einrichtungen (12) zum Tragen der Mehrzahl von Gegenständen umfaßt, wobei die Einrichtungen vier Ecken aufweisen und eine Basis bilden für unterteilende Vorrichtungen (30) zur Unterteilung des Raumes, der sich oberhalb der Trage-Einrichtungen (12) ausdehnt, in die Bereiche (28) zur Aufnahme der Gegenstände, wobei die unterteilenden Vorrichtungen von der Basis nach oben ragen und Paare von senkrechten Schlitzen (60, 62) aufweisen, die sich zwischen den unterteilenden Vorrichtungen und in der gegenstandsaufnehmenden, bereichsdefinierenden Begrenzung jedes Bereiches (28) zur Aufnahme der Gegenstände befinden, wobei die Schlitze (60,62) im wesentlichen diametral gegenüber voneinander in den Bereichen (28) zur Aufnahme der Objekte angeordnet sind, und wobei sich einige der Schlitze in der Seitenwand der Vorrichtung (10) befinden,
dadurch gekennzeichnet,
daß die Bereiche (28) zur Aufnahme der Gegenstände nahe beieinander zweidimensional über der Fläche der Basis (28) angeordnet sind und unterteilende Vorrichtungen (30) von im wesentlichen T-förmigem Querschnitt mit drei Oberflächen umfassen, wobei die erste Oberfläche dem waagerechten Teil des T's entspricht und ein Stück eines ersten Teiles (42) der Vorrichtung und ein Teil der Seitenwände der Vorrichtung (10) bildet und wobei die weiteren zwei Oberflächen den senkrechten Seiten des senkrechten Teiles des T's entsprechen, und jede ein Stück eines zweiten Teils (44) der Vorrichtung bildet, wobei die zwei weiteren Oberflächen von der Seitenwand nach innen deuten und eine der zwei Flächen (48, 50) der bereichsdefinierenden Begrenzung von zwei unterschiedlichen angrenzenden Bereichen der Bereiche (28) zur Aufnahme der Gegenstände definieren, und mit einem Zwischenraum zwischen den inneren Abschlüssen (52), die den unteren Enden des T's der T-förmigen unterteilenden Vorrichtungen entsprechen, und wobei der Zwischenraum einen mittleren offenen Bereich (54) zwischen den Abschlüssen bildet.

2. Eine Vorrichtung (110) mit vier Seitenwänden zur Aufnahme einer Mehrzahl von Gegenständen in einer Mehrzahl von Stapel in Bereich (28, 128) zur Aufnahme der Gegenstände, wobei die Vorrichtung (110) Einrichtungen (112) zum Tragen der Mehrzahl von Gegenständen umfaßt, wobei die Einrichtungen vier Ecken aufweisen und eine Basis bilden für unterteilende Vorrichtungen (134) zur Unterteilung des Raumes, der sich oberhalb der Trage-Einrichtungen (112) ausdehnt, in die Bereiche (128) zur Aufnahme der Gegenstände, wobei die unterteilenden Vorrichtungen von der Basis nach oben ragen und Paare von senkrechten Schlitz aufweisen, die sich zwischen den unterteilenden Vorrichtungen und in der gegenstandsufnehmenden, bereichsdefinierenden Begrenzung jedes Bereiches (128) zur Aufnahme der Gegenstände befinden, wobei die Schlitze im wesentlichen diametral gegenüber voneinander in den Bereichen (128) zur Aufnahme der Objekte angeordnet sind, und wobei sich einige der Schlitze in der Seitenwand der Vorrichtung (110) befinden,
dadurch gekennzeichnet,
daß die Bereiche (128) zur Aufnahme der Gegenstände nahe beieinander zweidimensional über der Fläche der Basis (128) angeordnet sind und unterteilende Vorrichtungen (134) von im wesentlichen T-förmigem Querschnitt mit drei Oberflächen umfassen, wobei die erste Oberfläche dem waagerechten Teil des T's entspricht und ein Stück eines ersten Teiles der Vorrichtung und ein Teil der Seitenwände der Vorrichtung (110) bildet und wobei die weiteren zwei Oberflächen den senkrechten Seiten des senkrechten Teiles des T's entsprechen, und jede ein Stück eines zweiten Teils (44) der Vorrichtung bildet, wobei die zwei weiteren Flächen von dem Teil der Seitenwand nach innen deuten und eine der zwei Oberflächen (148, 150) der bereichsdefinierenden Begrenzung von zwei unterschiedlichen angrenzenden Bereichen der Bereiche (128) zur Aufnahme der Gegenstände definiert und weiterhin im wesentlichen doppel-T-förmige unterteilende Vorrichtungen (138) von kreuzrörmigem Querschnitt umfaßt, wobei die normalen waagerechten Teile von zwei T's eines gewöhnlichen Teils von jeder doppel-T- und kreuzförmigen Vorrichtung (138) bilden, wobei jede doppel-T- und kreuzförmige unterteilende Vorrichtung (138) vier Oberflächen (139) aufweist, die den vier Seiten der zwei senkrechten Teile der T's entsprechen, wobei jede der Oberflächen eine von vier Flächen (148, 150) der jeweiligen bereichsdefinierenden Begrenzung der vier verschiedenen angrenzenden Bereiche der Bereiche (128) zur Aufnahme der Gegenstände definiert und wobei durch einen Zwischenraum zwischen gegenüber angeordneten inneren Abschlüssen (152) von benachbarten unterteilenden Vorrichtungen (134, 138) ein freier Bereich zwischen den Abschlüssen (152) gebildet wird.

3. Die Vorrichtung gemäß Anspruch 1 oder 2, dadurch gekennzeichnet, daß die genannten Gegenstände Geschirr sind.

4. Die Vorrichtung gemäß Anspruch 1, 2 oder 3, dadurch gekennzeichnet, daß die Basis der tragenden Einrichtungen (12, 112) einen quadratischen Querschnitt aufweist.

5. Die Vorrichtung gemäß einem der Ansprüche 1 bis 4, dadurch gekennzeichnet, daß die unterteilenden Vorrichtungen (30, 134, 136, 138), die die Bereiche zur Aufnahme der Gegenstände definieren, ungefähr 60% der Außenseite mindestens eines Bereiches (28, 128) zur Aufnahme der Gegenstände umfassen, und daß das Paar von Schlitzen (60,62) zusammen nicht mehr als ungefähr 40% der Außenseiten der Bereiche (28, 12) zur Aufnahme der Gegenstände bedeckt.

6. Die Vorrichtung gemäß einem der Ansprüche 1 bis 4, dadurch gekennzeichnet, daß die unterteilenden Vorrichtungen (30, 134, 136, 138), die die Bereiche zur Aufnahme der Gegenstände definieren, ungefähr 75% der Außenseite mindestens eines Bereiches (28, 128) zur Aufnahme der Gegenstände umfassen, und daß das Paar von Schlitzen (60, 62) zusammen nicht mehr als ungefähr 25% der Außenseiten der Bereiche (28, 128) zur Aufnahme der Gegenstände bedeckt.

7. Die Vorrichtung gemäß einem der Ansprüche 1 bis 6, dadurch gekennzeichnet, daß die unterteilenden Vorrichtungen (30, 134, 138) und die tragenden Einrichtungen (12, 112) aus einem einzigen Teil bestehen.

8. Die Vorrichtung gemäß einem der Ansprüche 1 bis 7, dadurch gekennzeichnet, daß sie weiterhin gestellfesthaltende Einrichtungen (38) zum Festhalten einer Mehrzahl von gestapelten Gestellen umfaßt, die oben auf der Vorrichtung (10, 110) angeordnet sind, wobei die Einrichtungen (38) zum Festhalten der Gestelle auf der Oberseite der unterteilenden Vorrichtungen angeordnet sind und die obere Fläche von mindestens zwei Teilen der unterteilenden Vorrichtungen (30, 134, 138) umfassen, wobei jede obere Fläche das erste Teil (42) und das zweite Teil (44) mit einer niedrigeren Höhe als das erste Teil umfaßt.

9. Die Vorrichtung gemäß einem der Ansprüche 1 bis 8, dadurch gekennzeichnet, daß die Bereiche (28, 128) zur Aufnahme der Gegenstände einen im wesentlichen kreisförmigen waagrechten Querschnitt aufweisen und daß die zwei Flächen (48, 50, 148, 150) jedes zweiten Teiles einen waagrechten Querschnitt von der Form eines Kreisausschnittes haben.

10. Die Vorrichtung gemäß einem der Ansprüche 1 bis 9, dadurch gekennzeichnet, daß die Bereiche (28, 128) zur Aufnahme der Gegenstände gleich große Querschnitte aufweisen.

11. Die Vorrichtung gemäß einem der Ansprüche 1 bis 10, dadurch gkennzeichnet, daß die ersten Teile (42) benachbarter unterteilender Vorrichtungen (30, 134, 138) im wesentlichen senkrecht zueinander verlaufen.

12. Die Vorrichtung gemäß einem der Ansprüche 1 bis 11, dadurch gekennzeichnet, daß jeder zweite Teil (44) Einrichtungen (64) zur Stabilisierung der Gegenstände, die in den mit dem zweiten Teil verbundenen Bereichen (28, 128) zur Aufnahme der Gegenstände gestapelt sind, aufweist.

13. Die Vorrichtung gemäß Anspruch 12, dadurch gekennzeichnet, daß die stabilisierenden Einrichtungen eine Mehrzahl von Stabilisatoren (64) umfassen, die in Richtung einer longitudinalen Achse ragen, die durch die Mitte mindestens eines Bereiches (28, 128) zur Aufnahme der Gegenstände verläuft.

14. Die Vorrichtung gemäß Anspruch 12 oder 13, dadurch gekennzeichnet, daß die Stabilisierungs-Einrichtungen drei Stabilisatoren (64) umfassen, die von der Basis nach oben stehen und von jeder gegenstandsaufnehmenden, bereichsdefinierenden Fläche (48, 50, 148, 150) nach innen ragen, und die in im wesentlichen gleichen Abständen voneinander angeordnet sind.

15. Die Vorrichtung gemäß Anspruch 12 oder 13, dadurch gekennzeichnet, daß die Stabilisierungs-Einrichtungen sechs im Abstand voneinander angeordnete Stabilisatoren (64) umfassen.

16. Die Vorrichtung gemäß Anspruch 12,13 oder 15, dadurch gekennzeichnet, daß jeder Stabilisator (64) im wesentlichen parallel zu allen anderen ist, und daß die Vielzahl der Stabilisatoren (64) im wesentlichen entlang der gesamten vertikalen Höhe der Unterteilungs-Vorrichtungen von der Basis (12, 112) senkrecht nach oben stehen.

17. Die Vorrichtung gemäß irgendeinem der Ansprüche 1, 3 bis 16, dadurch gekennzeichnet, daß vier T-förmige unterteilende Vorrichtungen (30) gemäß vier gegenstandsaufnehmen Bereichen (28) vorgesehen sind und daß einer der Schlitze (60) in jedem Paar (60, 62) von Schlitzen direkt über einer anderen Ecke der tragenden Einrichtung (12) angeordnet ist.

18. Die Vorrichtung gemäß Anspruch 17, dadurch gekennzeichnet, daß die Basis (12) eine Mitte umfaßt, wobei die zweiten Teile (44) jeder unterteilenden Vorrichtung (30) vom ersten Teil (42) zu einer Achse hinragen, die senkrecht zur Basis (12) und durch die Mitte verläuft, wobei der zweite Teil (44) einen Abschluß (58) umfaßt, der die zwei gegenstandaufnehmenden Flächen (48, 50) verbindet und der Achse gegenüberliegt, wobei die Abschlüsse (58) jedes zweiten Teiles (44) in einem Paar von gegenstandsaufnehmenden, bereichsdefinierenden Flächen (48, 50) so im Abstand voneinander angeordnet sind, daß sie das Paar von Schlitzen (62) in jedem gegenstandsaufnehmenden Bereich (28) formen, wobei der Abschluß (58) jedes zweiten Teiles (44) im Abstand von der Achse angeordnet ist, so daß ein mittlerer offener Bereich (44) gebildet wird, der die Achse umgibt und durch die Abschlüsse (48) der zweiten Teile der unterteilenden Vorrichtungen (30) begrenzt wird, und wobei der mittlere offene Bereich (54) groß genug ist, um die Hand und den Arm eines Benutzers aufzunehmen, der durch den mittleren offenen Bereich hindurchgreift, um ein Stück Geschirr aus einem Geschirrstapel in irgendeinem der gegenstandsaufnehmenden Bereiche (28) zu nehmen.

19. Die Vorrichtung gemäß Anspruch 17 oder 18, dadurch gekennzeichnet, daß jede gegenstandsaufnehmende, bereichsdefinierende Fläche (48,50) des zweiten Teils einen an die Außenwand angrenzenden äußeren Abschluß (56) und einen, vom äußeren Abschluß (56) im Abstand angeordneten inneren Abschluß (58) umfaßt, wobei jedes Paar Flächen (48, 50), das die Begrenzung jedes gegenstandsaufnehmenden Bereiches definiert, zwei gegenstandsaufnehmende, bereichsdefinierende Flächen (48, 50) von unterschiedlichen unterteilenden Vorrichtungen (30) umfaßt, deren äußere Abschlüsse (56) in einem Abstand angeordnet sind, um einen der Schlitze (60) zu definieren, und deren inneren Abschlüsse (58) in einem Abstand angeordnet sind, um den anderen der Schlitze (68) zu definieren, wobei die Basis (12) vier Ecken umfaßt und die durch die äußeren Abschlüsse (56) definierten Schlitze (60, 62) sich oberhalb der Ecken erstrecken.

20. Die Vorrichtung gemäß irgendeinem der Ansprüche 17 bis 19, dadurch gekennzeichnet, daß die unterteilenden Vorrichtungen vier unterteilende Vorrichtungsteile (38) umfassen, von denen jede zwei gegenstandsaufnehmende bereichsdefinierende Flächen (48, 50) aufweist, wobei jeder gegenstandsaufnehmende Bereich (28) durch ein Paar von gegenstandsaufnehmenden, bereichsdefinierenden Flächen (48, 50) von verschiedenen unterteilenden Vorrichtungen (38) definiert wird, wobei jedes Teil (38) im wesentlichen T-förmig ist und erste und zweite Teile (42,44) aufweist, wobei der erste Teil (42) eine Außenwand der Vorrichtung (10) bildet, wobei der zweite Teil (44) zwei gegenstandsaufnehmende, bereichsdefinierende Flächen (48, 50) umfaßt, wobei ein innerer Abschluß (58) des zweiten Teils (44) jeder Unterteilung an den mittleren offenen Pereich angrenzt und in einem Abstand von einer Achse angeordnet ist, die senkrecht zu den tragenden Einrichtung (12) und durch die Mitte der tragenden Einrichtungen (12) verläuft, wobei die inneren Abschlüsse (58) von jedem Paar der der zweiten Teile (44) von jedem Paar der gegenstandsaufnehmenden, bereichsdefinierenden Flächen (48,50) in einem Abstand voneinander angeordnet sind, wobei der Abstand zwischen den inneren Abschlüssen (58) von jedem Paar der zweiten Teile (44) von jedem Paar der gegenstandsaufnehmenden, bereichsdefinierenden Flächen (48,50) einen der Schlitze (62) in jedem Paar von Schlitzen (60,62) in jedem gegenstandsaufnehmenden Bereich (28) bildet, und wobei die äußeren Abschlüsse von jedem Paar der zweiten Teile (44) und dem Paar der gegenstandsaufnehmenden, bereichsdefinierenden Flächen (48,50) in einem Abstand voneinander angeordnet sind, um den anderen der Schlitze (60) in jedem Paar von Schlitz: (60, 62) in jedem gegenstandsaufnehmenden Bereich (28) zu bilden.

21. Die Vorrichtung gemäß irgendeinem der Ansprüche 2 bis 16, dadurch gekennzeichnet, daß die Vorrichtung (110) mit neun gegenstandsaufnehmenden Bereichen (128) vier T-förmige unterteilende Vorrichtungen (134), zwei doppel-T-kreuzförmige unterteilende Vorrichtungen (138) und zwei Schlitze (156) über zwei gegenüberliegenden Ecken der Basis (112) aufweist.

22. Die Vorrichtung gemäß Anspruch 21, dadurch gekennzeichnet, daß eine Achse, die senkrecht zur Oberfläche der Basis (112) und durch die Mitte der Basis (112) verläuft, ebenfalls durch einen der gegenstandsaufnehmenden Bereiche (128) verläuft, wobei die unterteilenden Vorrichtungen sechs äußere unterteilende Vorrichtungs-Teile (134, 136) umfassen, von denen Teile die Außenwände der Vorrichtung (110) bilden, und außerdem zwei innere unterteilende Einrichtungs-Teile (138), die in einem Abstand von den Außenwänden angeordnet sind.

23. Die Vorrichtung gemäß Anspruch 22, dadurch gekennzeichnet, daß zwei der äußeren Unterteilungen (136) jeweils eine gegenstandsaufnehmende, bereichsdefinierende Fläche (140) umfassen, die von gegenüberliegenden Ecken der Basis (112) nach oben ragen, wobei vier der äußeren Unterteilungen (134) jeweils eine im wesentlichen T-förmige unterteilende Vorrichtung (134) umfassen, die zwei gegenstandsaufnehmende, bereichsdefinierende Flächen (148, 150) umfaßt und wobei die zwei inneren unterteilenden Vorrichtungen (138) im wesentlichen kreuzförmige unterteilende Vorrichtungen sind, die vier gegenstandsaufnehmende, bereichsdefinierende Flächen (139) umfassen, wobei jeder gegenstandsaufnehmende Bereich (128) durch ein Paar von gegenstandsaufnehmende, bereichsdefinierende Flächen (139, 140, 148, 150) definiert wird, und wobei jedes Teil von jedem Paar von Flächen zu einer unterschiedlichen unterteilenden Vorrichtung (134, 136, 138) gehört.

24. Die Vorrichtung gemäß einem der Ansprüche 21 bis 23, dadurch gekennzeichnet, daß die unterteilenden Vorrichtungen (134, 138) jeweils ein Paar von in Abstand voneinander angeordneten gegenstandsaufnehmenden, bereichsdefinierenden Flächen (139, 140, 148, 150) definiert, wobei die unterteilenden Vorrichtungen (126) ein Paar Schlitze definieren, die durch den Abstand zwischen den beiden Abschlüssen der zwei Flächen (139, 140, 148, 150) gebildet werden, die jeweils ein Paar von Flächen umfassen, und wobei jede der Flächen drei Stabilisatoren umfaßt, die von der Fläche in Richtung der Mitte des gegenstandsaufnehmenden Bereichs (128) ragen.

25. Die Vorrichtung gemäß einem der Ansprüche 21 bis 24, dadurch gekennzeichnet, daß einer der gegenstandsaufnehmenden Bereiche (128) mit dem mittleren offenen Bereich zusammenfällt.

26. Die Vorrichtung gemäß einem der Ansprüche 21 bis 24, dadurch gekennzeichnet, daß die unterteilenden Vorrichtungen eine Mehrzahl von äußeren unterteilenden Teilen (134, 136) umfassen, die jeweils eine Außenwand der Vorrichtung (110) bilden und außerdem zwei innere unterteilende Teile (138), die in einem Abstand vom Außenrand der tragenden Einrichtung (112) angeordnet sind, wobei jeder innere unterteilende Teil (138) vier gegenstandsaufnehmende, bereichsdefinierende Flächen (139) umfaßt, wobei jeder gegenstandsaufnehmende Bereich (128) durch zwei gegenstandsaufnehmende bereichsdefinierende Flächen (139, 140, 148, 150) von verschiedenen unterteilenden Teilen (134, 136, 138) definiert wird, wobei der mittlere offene Bereich (128) durch die gegenstandsaufnehmenden, bereichsdefinierenden Flächen (139) der zwei inneren unterteilenden Teile (138) definiert wird, wobei die Mehrzahl der äußeren unterteilenden Teile sechs äußere unterteilende Teile (134, 136) umfaßt, von denen zwei Eck-Unterteilungs-Teile (136) sind, die von gegenüberliegenden Ecken der tragenden Einrichtung (112) nach oben ragen und von denen vier (134) im Abstand von den anderen Ecken der tragenden Einrichtung (112) angeordnet sind, wobei jede der vier äußeren unterteilenden Teile (134), die sich nicht an den Ecken befinden, zwei gegenstandsdaufnehmende, bereichsdefinierende Flächen (148, 150) umfaßt, wobei jede Eck-Unterteilung (136) eine gegenstandsaufnehmende, bereichsdefinierende Fläche (140) umfaßt, wobei jeder unterteilende Teil (134, 136, 138) im Abstand zu den anderen unterteilenden Teilen (134, 136, 138) angeordnet ist und wobei jeder Schlitz durch den Abstand zwischen den unterteilenden Teilen (134, 136, 138) gebildet wird.

## Revendications

1. Dispositif (10) avec quatre parties de paroi latérale pour stocker une pluralité d'objets en une pluralité de piles dans des régions (28) recevant des objets à l'intérieur de ce dispositif (10), lequel comprend un moyen (12) pour supporter ladite pluralité d'objets, ledit moyen ayant quatre coins et étant une base pour des moyens de cloisonnement (30) pour diviser l'espace s'étendant au-dessus dudit moyen de support (12) dans lesdites régions (28) recevant des objets, dans lequel lesdits moyens de cloisonnement s'étendent vers le haut à partir de ladite base et ont des paires de fentes (60, 62) dirigées verticalement entre lesdits moyens de cloisonnement et dans la frontière délimitant chaque région (28) recevant des objets, dans lequel lesdites fentes (60, 62) sont espacées l'une de l'autre et opposées diamétralement l'une à l'autre dans lesdites régions (28) recevant des objets, et dans lequel certaines de ces fentes sont positionnées dans la paroi latérale dudit dispositif (10),
**caractérisé** en ce que lesdites régions (28) recevant des objets sont disposées ensemble, les unes près des autres, en deux dimensions au-dessus de la surface de ladite base (12) et comprennent des organes de cloisonnement (30) ayant une section généralement en forme de T avec trois surfaces, la première surface correspondant à la partie horizontale dudit T faisant partie d'une première partie (42) desdits organes et étant une partie des parois latérales dudit dispositif (10), et les deux autres surfaces correspondant aux côtés verticaux de la partie verticale dudit T, chacune faisant partie d'une deuxième partie (44) desdits organes, lesdites deux autres surfaces faisant saillie vers l'intérieur à partir de ladite partie de la paroi latérale et formant une des deux parties de surfaces (48, 50) de la frontière délimitant des régions de deux différentes régions adjacentes desdites régions (28) recevant des objets, avec un espace entre les extrémités intérieures (52) correspondant aux extrémités inférieures du T des organes de cloisonnement en forme de T, ledit espace formant une région centrale ouverte (54) entre lesdites extrémites.

2. Dispositif (110) avec quatre parties de paroi latérale pour stocker une pluralité d'objets en une pluralité de piles dans des régions (128) recevant des objets dans ce dispositif, lequel comprend un moyen (112) pour supporter ladite pluralité d'objets, ledit moyen ayant quatre coins et étant une base pour des moyens de cloisonnement (134) pour diviser l'espace s'étendant au-dessus dudit moyen de support (112) dans lesdites régions (128) recevant des objets, dans lequel lesdits moyens de cloisonnement s'étendent vers le haut à partir de ladite base et ont des paires de fentes dirigées verticalement entre lesdits moyens de cloisonnement et dans la frontière délimitant chaque région (128) recevant des objets, dans lequel lesdites fentes sont espacées l'une de l'autre et opposées l'une à l'autre sensiblement diamétralement dans lesdites régions (128) recevant des objets, et dans lequel certaines desdites fentes sont positionnées dans la paroi latérale dudit dispositif (110),
**caractérisé** en ce que lesdites régions (128) recevant des objets sont disposées ensemble, les unes près des autres, en deux dimensions au-dessus de la surface de ladite base (112) en comprenant des organes de cloisonnement (134) ayant une section en forme générale de T, avec trois surfaces, la première surface correspondant à la partie horizontale dudit T faisant partie d'une première partie desdits organes et étant une partie des parois latérales dudit dispositif (110) et les deux autres surfaces correspondant aux côtés verticaux de la partie verticale dudit T étant chacune une partie d'une deuxième partie desdits organes, lesdites deux autres surfaces faisant saillie vers l'intérieur à partir de ladite partie de paroi latérale et formant une des deux parties de surface (148, 150) de la frontière délimitant des régions de deux différentes régions adjacentes auxdites régions (128) recevant des objets, et comprenant en outre des organes de cloisonnement (138) ayant la forme générale d'un double T et une section en croix, avec les parties horizontales communes des deux T étant une partie commune de chacun desdits organes (138) en forme de double T en croix, lesdits organes de cloisonnement (138) en forme de double T en croix ayant chacun quatre surfaces (139) correspondant aux quatre côtés des deux parties verticales desdits T, chacune desdites surfaces formant une des quatre parties de surfaces (148, 150) de la frontière respective de quatre différentes régions (128) adjacentes recevant des objets et avec un espace entre les extrémités intérieures opposées (152) d'organes de cloisonnement (134, 138) adjacents formant une région ouverte entre lesdites extrémités (152).

3. Dispositif selon la revendication 1 ou 2, caractérisé en ce que lesdits objets sont des plats.

4. Dispositif selon la revendication 1, 2 ou 3, caractérisé en ce que ledit moyen de base de support (12, 112) a une forme transversale carrée.

5. Dispositif selon l'une quelconque des revendications 1 à 4, caractérisé en ce que lesdits organes de cloisonnement (30; 134, 136, 138) délimitant lesdites régions (28, 128) recevant des objets entourent environ 60% de la périphérie latérale d'au moins une desdites régions (28, 128) recevant des objets, et ladite paire de fentes (60, 62) s'étendent ensemble sur pas plus d'environ 40% de ladite périphérie latérale desdites régions (28, 128) recevant des objets.

6. Dispositif selon l'une quelconque des revendications 1 à 4, caractérisé en ce que lesdits organes de cloisonnement (30; 134, 136, 138) délimitant lesdites régions (28, 128) recevant des objets entourent environ 75% de la périphérie latérale d'au moins une desdites régions (28, 128) recevant des objets, et ladite paire de lentes (60, 62) s'étendent ensemble sur pas plus d'environ 25% de la périphérie latérale desdites régions (28, 128) recevant des objets.

7. Dispositif selon l'une quelconque des revendications 1 à 6, caractérisé en ce que lesdits organes de cloisonnement (30; 134, 136, 138) et ledit moyen de support (12, 112) constituent un corps unitaire.

8. Dispositif selon l'une quelconque des revendications 1 à 7, caractérisé en ce qu'il comprend en outre des moyens (38) de rétention de plateaux pour retenir une pluralité de plateaux empilés placés au sommet dudit dispositif (10, 110), lesdits moyens (38) de rétention de plateaux étant placés sur la surface supérieure desdits moyens de cloisonnement et comprenant la surface supérieure d'au moins deux organes de cloisonnement (30; 134, 136, 138) du dispositif, chaque surface supérieure comprenant ladite première partie (42) et ladite deuxième partie (44) de hauteur inférieure à ladite première partie.

9. Dispositif selon l'une quelconque des revendications 1 à 8, caractérisé en ce que lesdites régions (28, 128) recevant des objets ont une forme sensiblement circulaire en coupe horizontale et lesdites deux surfaces (48,50; 148, 150) de chaque deuxième partie ont une forme partiellement circulaire en coupe horizontale.

10. Dispositif selon l'une quelconque des revendications 1 à 9, caractérisé en ce que lesdites régions (28, 128) recevant des objets ont une taille transversale égale.

11. Dispositif selon l'une quelconque des revendications 1 à 10, caractérisé en ce que lesdites premières parties (42) d'organes de cloisonnement (30, 134, 136, 138) adjacents s'étendent sensiblement perpendiculairement l'une à l'autre.

12. Dispositif selon l'une quelconque des revendications 1 à 11, caractérisé en ce que chaque deuxième partie (44) comprend des moyens (64) pour stabiliser les objets empilés dans ladite région (28, 128) recevant des objets, associée à ladite deuxième partie.

13. Dispositif selon la revendication 12, caractérisé en ce que lesdits moyens stabilisateurs comprennent une pluralité d'ailettes (64) stabilisatrices faisant saillie vers un axe longitudinal passant par le centre d'au moins une desdites régions (28, 128) recevant des objets.

14. Dispositif selon la revendication 12 ou 13, caractérisé en ce que lesdits moyens stabilisateurs comprennent trois ailettes (64) stabilisatrices s'étendant verticalement à partir de ladite base (12, 112) et faisant saillie vers l'intérieur à partir de chaque surface (48, 50; 148, 150) délimitant une région recevant des objets, et espacées entre elles à des distances sensiblement égales.

15. Dispositif selon la revendication 12 ou 13, caractérisé en ce que lesdits moyens stabilisateurs comprennent six ailettes (64) stabilisatrices espacées entre elles.

16. Dispositif selon la revendication 12, 13 ou 15, caractérisé en ce que chaque ailette (64) stabilisatrice est sensiblement parallèle à toutes les autres, et ladite pluralité d'ailettes (64) stabilisatricess'étend verticalement à partir de ladite base (12, 112) sur pratiquement toute la hauteur verticale desdits organes de cloisonnement.

17. Dispositif selon l'une quelconque des revendications 1, 3 à 16, caractérisé en ce que quatre organes de cloisonnement (30) en forme de T sont prévus pour quatre régions (28) recevant des objets, et une desdites fentes (60) dans chaque paire (60, 62) de fentes est disposée directement au-dessus d'un coin différent dudit moyen de support (12).

18. Dispositif selon la revendication 17, caractérisé en ce que ladite base (12) comprend un centre, ladite deuxième partie (44) de chaque organe de cloisonnement (30) s'étend à partir de ladite première partie (42) vers un axe perpendiculaire à ladite base (12) et passant par ledit centre , chaque deuxième partie (44) comprend une extrémité (58) reliant lesdites deux régions (48,50) recevant des objets et faisant face audit axe, lesdites extrémités (58) de chaque deuxième partie (44) dans une paire de surfaces (48, 50) délimitant une région recevant des objets sont espacées l'une de l'autre de manière à former ladite paire de fentes (62) dans chaque région (28) recevant des objets, ladite extrémité (58) de chaque deuxième partie (44)est espacée dudit axe de manière à former une région centrale ouverte (54) entourant ledit axe, et bornée par lesdites extrémités (58) desdites deuxièmes parties desdits organes de cloisonnement (30), et ladite région centrale ouverte (54) est suffisamment grande pour recevoir la main et le bras d'un utilisateur engagés dans ladite région centrale ouverte pour saisir un plat dans une pile de plats dans l'une quelconque desdites régions (28) recevant des objets.

19. Dispositif selon la revendication 17 ou 18, caractérisé en ce que chaque surface (48, 50) de ladite deuxième partie délimitant une région recevant des objets comprend une extrémité extérieure (56) adjacente à ladite paroi extérieure et une extrémité intérieure (58) espacée vers l'intérieur à partir de ladite extrémité extérieure (56), chacune desdites paires de surfaces (48, 50) formant la frontière de chaque région recevant des objets comprend deux surfaces (48, 50) délimitant une région recevant des objets, ces surfaces appartenant à des organes de cloisonnement (30) différents, et leurs extrémités extérieures (56) étant espacées entre elles pour former une desdites fentes (60) et leurs extrémités intérieures (58) étant espacées entre elles pour former l'autre desdites fentes (62), ladite base (12) comprenant quatre coins et lesdites fentes (60, 62) délimitées par lesdites extrémités extérieures (56) s'étendant au-dessus desdits coins.

20. Dispositif selon l'une quelconque des revendications 17 à 19, caractérisé en ce que ledit moyen de cloisonnement comprend quatre organes de cloisonnement (38) ayant chacun deux surfaces (48, 50) délimitant une région recevant des objets, en ce que chaque région (28) recevant des objets est délimitée par une paire de surfaces (48, 50) appartenant à des organes de cloisonnement (38) différents, en ce que chaque organe (38) a une forme générale en T ayant une première et une deuxième partie (42, 44), en ce que ladite première partie (42) forme une paroi extérieure dudit dispositif (10), en ce que ladite deuxième partie (44) comprend lesdites deux surfaces (48, 50) délimitant des régions recevant des objets, en ce qu'une extrémité intérieure (58) de ladite deuxième partie (44) de chaque cloison borde ladite région centrale ouverte (54) et est espacée à distance d'un axe perpendiculaire au moyen de support (12) et passant par le centre dudit moyen de support (12), en ce que lesdites extrémités intérieures (58) de chaque paire desdites deuxièmes parties (44) de chaque paire de surfaces (48, 50) délimitant des régions recevant des objets sont espacées l'une de l'autre, en ce que l'espace entre lesdites extrémités intérieures (58) de chaque paire de deuxièmes parties(44) de chaque paire de surfaces (48, 50) délimitant une région recevant des objets forme une desdites fentes (62) dans chaque paire de fentes (60, 62) dans chaque région (28) recevant des objets, et en ce que les extrémités extérieures (56) de chaque paire de deuxièmes parties (44) de chaque paire de surfaces (48, 50) délimitant une région recevant des objets sont espacées entre elles pour former l'autre desdites fentes (60) dans chaque paire de fentes (60, 62) dans chaque région (28) recevant des objets.

21. Dispositif selon l'une quelconque des revendications 2 à 16, caractérisé en ce que le dispositif (110) avec neuf régions (128) recevant des objets a quatre organes de cloisonnement (134) en forme de T, deux organes de cloisonnement (138) en forme de double T en croix, et deux fentes (156) au-dessus de deux coins opposés de ladite base (112).

22. Dispositif selon la revendication 21, caractérisé en ce qu'un axe perpendiculaire à la face supérieure de ladite base (112) et passant par le centre de ladite base (112) traverse aussi une desdites régions (128) recevant des objets, dans lequel ledit moyen de cloisonnement comprend six organes extérieurs (134, 136) du moyen de cloisonnement, dont des parties forment les parois extérieures dudit dispositif (110), et deux organes intérieurs (138) du moyen de cloisonnement, espacés par rapport auxdites parois extérieures.

23. Dispositif selon la revendication 22, caractérisé en ce que deux (136) desdites cloisons extérieures comprennent chacune une surface (140) délimitant des régions recevant des objets, qui s'étend vers le haut à partir de coins opposés de ladite base (112), en ce que quatre (134) desdites cloisons extérieures comprennent chacune un organe de cloisonnement (134) en forme générale de T comprenant lesdites deux surfaces (148, 150) délimitant des régions recevant des objets, et deux organes de cloisonnement (138) intérieurs sont des organes de cloisonnement ayant une forme générale en croix comprenant quatre surfaces (139) délimitant des régions recevant des objets, en ce que chaque région (128) recevant des objets est délimitée par une paire de surfaces (139, 140, 148, 150) délimitant des régions recevant des objets, et en ce que chaque élément de ladite paire de surfaces appartient à un organe de cloisonnement (134, 136, 138) différent.

24. Dispositif selon l'une quelconque des revendications 21 à 23, caractérisé en ce que lesdits organes du moyen de cloisonnement (134, 138) forment chacun une paire de surfaces (139, 140, 148, 150) espacées délimitant des régions recevant des objets, en ce que ledit moyen de cloisonnement (126) définit une paire de fentes formées par l'espace entre les deux extrémités des deux surfaces (139, 140, 148, 150) comprenant chacune ladite paire de surfaces, et en ce que chacune desdites surfaces comprend trois ailettes stabilisatrices faisant saillie à partir de ladite surface vers le centre de ladite région (128) recevant des objets.

25. Dispositif selon l'une guelconque des revendications 21 à 24, caractérisé en ce qu'une desdites régions (128) coïncide avec ladite région centrale ouverte.

26. Dispositif selon l'une quelconque des revendications 21 à 24, caractérisé en ce que lesdits organes du moyen de cloisonnement comprennent une pluralité d'organes de cloisonnement extérieurs (134, 136) formant chacun une paroi extérieure dudit dispositif (110) et deux organes de cloisonnement intérieurs (138) espacés par rapport au bord extérieur dudit moyen de support (112), en ce que chaque organe de cloisonnement intérieur (138) comprend quatre surfaces (139) délimitant des régions recevant des objets, en ce que chaque région (128) recevant des objets est délimitée par deux surfaces (139, 140, 148, 150) délimitant des régions recevant des objets, ces surfaces appartenant à des organes de cloisonnement (134, 136, 138) différents, en ce que ladite région centrale ouverte (128) est délimitée par des surfaces (139) desdits deux organes de cloisonnement intérieurs (138), en ce que ladite pluralité d'organes de cloisonnement extérieurs comprend six organes de cloisonnement extérieurs (134, 136) dont deux sont des organes (136) de cloisonnement d'angle qui s'étendent vers le haut à partir de coins opposés dudit moyen de support (112), et dont quatre (134) sont espacés par rapport aux autres coins dudit moyen de support (112), en ce que chacun desdits organes de cloisonnement extérieurs (134) non situés sur des coins comprend deux surfaces (148, 150) délimitant des régions recevant des objets, en ce que chaque cloison d'angle (136) comprend une surface (140) délimitant une région recevant des objets, en ce que chaque organe de cloisonnement (134, 136, 138) est espacé par rapport aux autres organes de cloisonnement (134, 136, 138), et en ce que chaque fente est formée par l'espace entre lesdits organes de cloisonnement (134, 136, 138).
